# EUROPEAN PATENT APPLICATION

(11) **EP 4 603 278 A2**
(43) Date of publication of application: **20.08.2025**
(21) Application number: 25187340.2
(22) Date of filing: 04.11.2022
(51) Int. Cl.: B32B 23/06

(54) **BIODEGRADABLE ARTICLE**

(30) Priority: 08.11.2021 GB 202116031
(62) Divisional of application: 22814312.9
(71) Applicant: Futamura Chemical UK Limited, Cumbria CA7 9BG (GB)
(72) Inventor: COCKROFT, Martin Richard, Wigton, CA7 9BG (GB); WATSON, Hannah, Wigton, CA7 9BG (GB); SWEETMAN, Andrew, Wigton, CA7 9BG (GB); COWTON, Lucy, Wigton, CA7 9BG (GB)
(74) Representative: Brand Murray Fuller LLP

(57) **Abstract**

The present invention provides a biodegradable article comprising a cellulosic film that is coated with a natural wax composition on one surface and is laminated to a support layer comprising a paperbased substrate on the opposite surface.

## Description

The present invention concerns a biodegradable article comprising a wax-coated cellulosic film and preferably also a paper-based substrate.

A paper-based substrate is defined as a material produced by mechanically or chemically processing cellulose fibres and so covers materials such as paper, card and cardboard. Paper-based substrates are commonly used for single-use products, such as paper plates. These products are typically coated with a plastic and/or a synthetic resin in order to provide the necessary moisture resistance and food contact properties. However, these chemically modified or synthesised coating materials have problems with respect to sustainability and environmental impact, even if they are biodegradable, as outlined in EU Directive No. 2019/904 (the single use plastics directive). Therefore, there is a societal drive towards reducing the use of these chemically modified or synthesised coating materials.

It is known to use a cellulose film in a biodegradable laminated structure. For example, EP3266608 discloses a two-layer structure in which a cellulose film is laminated to a modified starch layer, as well as a three layer structure in which a cellulose film is laminated between a paper layer and a modified starch layer. However, the starch layer used has been chemically modified, while the coating on the cellulose film comprises chemically synthesised resins.

EP2829396 relates to a container for storing food, formed from a laminate comprising a first carrier layer made of cardboard, at least one second barrier layer, made of a food-compliant, fat, water and heat-resistant material on the side facing the food to be stored and an adhesive for connecting the first carrier layer and the second barrier layer. The first carrier layer, the adhesive and the second barrier layer are food-safe, and the barrier layer comprises a cellulose hydrate film which is provided with a first vapor barrier coating at least on the side facing or facing away from the food to be stored. The vapor barrier coating is preferably a biopolymer coating with a polyvinylidene chloride component, which is not biodegradable.

WO2012/081041 relates to a paper substrate to which at least one regenerated cellulose layer is bonded by means of a water-based adhesive with at least one layer of a material having the function of a barrier to the penetration of water. The barrier to the penetration of water is preferably a mixture of paraffins in the form of wax.

US4543282 relates to a food casing comprising cellulose and having a coating on its inner surface. The coating comprises a homogeneous mixture which includes a first component selected from a watersoluble cellulose ether, a starch ether or combination thereof, and a second component comprising a wax.

US6558719 relates to a foodstuffs skin based on cellulose with a water vapor impermeable layer on the outer surface and a coating consisting of at least two components on the inner surface. The coating comprises cross-linked polyaminoamide/epichlorhydrin resin and wax.

US1983875 relates to a laminated material comprising at least one ply or lamination of a moisture proof sheet or film of regenerated cellulose.

Thus, there remains a need in the art for a fully biodegradable article, preferably substantially or entirely absent of chemically modified or synthesised components, with the necessary moisture resistance and food contact properties.

According to a first aspect of the present invention, there is provided a biodegradable article comprising a cellulosic film that is coated with a natural wax composition on one surface and is laminated to a support layer comprising a paper-based substrate on the opposite surface.

The inventors of the present invention have identified a structure in which the layers of the article (i.e., the substrate, the cellulosic film, and the wax composition) are biodegradable and compostable, as well as being free from any chemically modified or synthesised components, while also having the necessary moisture resistance, heat resistance and food contact properties. This is achieved using a natural wax composition, which is suitable for food contact and increases the hydrophobicity of the cellulosic film.

While waxes are known in the art for use as a coating material, it is generally paraffin waxes that are used. However, paraffin waxes are not biodegradable. Thus, the present invention instead makes use of a natural wax composition, i.e. a composition containing natural waxes, which are those derived from plants or animals. These waxes are biodegradable and compostable, as well as providing the necessary food contact and moisture resistance properties.

Furthermore, the inventors have surprisingly found that the biodegradable article of the present invention has at least comparable moisture resistance, heat resistance and food contact properties to an article coated with a chemically modified or synthesised coating material, but without the associated problems with respect to sustainability and environmental impact.

The term "biodegradable" herein refers to a material which is capable of undergoing physical, biological decomposition, such that it ultimately decomposes into carbon dioxide (CO₂), biomass and water, and is recoverable through composting and anaerobic digestion. A material may be defined as "biodegradable" if it undergoes at least 90% biodegradation in less than 6 months (laboratory test method EN14855).

The cellulosic film may be laminated to the support layer using any suitable technique. The cellulosic film may be laminated to one surface of the support layer, or laminated to two or more, or all, surfaces of the support layer.

An adhesive layer may be present between the cellulosic film and the support layer. In other words, the cellulosic film may be adhered to the support layer using an adhesive. Preferably, the adhesive is a compostable adhesive. The adhesive may be solvent-based, water-based or solvent-free.

Alternatively, the cellulosic film may be thermally laminated to the support layer, without using an adhesive.

There may be a portion of the cellulosic film that is not laminated to the support layer and this portion may form a window in the article. The window portion may be at least partially surrounded by portions of the cellulosic film that are laminated to the support layer. The window portion may only contain the wax-coated cellulosic film and may be transparent or partially transparent. Thus, the cellulosic film can create a window portion in the article while also providing the required water vapour barrier properties.

The wax composition is preferably on the surface of the article intended to contact food, thereby providing the necessary heat and moisture resistance. Thus, the wax composition may be on the outermost surface of the article. Alternatively, when the film forms a package, the wax composition may be on the inside of the packaging.

The wax composition may comprise a single wax, or a blend of two or more waxes. The use of a blend of waxes has been found to provide improved heat resistance and moisture resistance properties.

In embodiments where the wax composition comprises a blend of two waxes, the weight ratio of the two waxes is from about 10:1 to about 1:10, or from about 5:1 to about 1:5, or from about 3:1 to about 1:3, or from about 2:1 to about 1:2, or about 1:1.

All of the waxes in the wax composition may be natural waxes, i.e. waxes derived from plants or animals. The wax composition may comprise beeswax. The wax composition may comprise or consist of one or more plant-based waxes.

The wax composition may comprise one or more of candelilla wax, carnauba wax, soy wax, hemp wax, jojoba wax, ouricury wax and rice-bran wax. Preferably, the wax composition comprises one or more of candelilla wax and carnauba wax.

One or more, or all, of the waxes in the wax composition may have a melting point of at least 60°C, or at least 65°C, or at least 70°C, or at least 75°C, thereby providing the necessary heat resistance to the coating. One or more of the waxes may have a relatively high melting point, for example above 75°C or above 80°C. This increases the heat resistance such that the article can be used in combination with heated food products.

In some embodiments, the wax composition does not comprise petroleum-based waxes. In other words, the wax composition may be absent of petroleum-based waxes, such as paraffin wax.

In addition to the one or more waxes, the wax composition may comprise one or more additives. The wax composition may comprise at least 50% by weight wax, preferably at least 60% by weight wax.

The inventors have advantageously found that the amount and type of natural wax present in the wax composition can be altered to tailor the properties and performance of the resulting film. For example, the amount and type of natural wax present by weight can be adjusted to tailor the gloss of the film, the optical properties of the film, the barrier properties of the film and/or the heat resistance of the film. Furthermore, a blend of waxes can be used to fine-tune the moisture barrier and heat resistance properties of the article, depending on the barrier properties and the melting temperature of the waxes included.

The additives may comprise one or more of an antiblock; a viscosity modifier; a natural resin other than wax; an inorganic filler; a thickening agent; and a polysaccharide additive.

Preferably none of the additives are chemically modified or synthesised polymers. Thus, the article is preferably absent chemically modified or synthesised polymers.

The antiblock may be selected from any suitable material but is preferably selected from one or more of amorphous silica and clay.

The viscosity modifier may be selected from any suitable material. The inventors of the present invention have found that using a viscosity modifier to increase the viscosity of the wax composition allows conventional coating techniques for cellulosic films to be used.

The natural resin other than wax may be selected from any suitable material, but is preferably rosin, more preferably pine rosin. The inventors of the present invention have surprisingly found that the use of a natural resin other than wax in the wax composition provides an improved coating laydown and surface appearance with a high gloss finish (which is particularly preferable for paper plate applications). The term "natural resin" refers to any resin derived from plant or animal sources, without significant chemical modification.

In some embodiments, the natural resin other than wax may be one or more of dammar, respin, and shellac.

The weight ratio of wax to natural resin (other than wax) may be from about 1:1 to about 4:1, preferably from about 1:1 to about 3:1.

The inorganic filler may be selected from any suitable material including, for example, one or more of quartz; carbon nanotubes; graphene; and clay. The inorganic filler may advantageously assist with preventing water absorption through the cellulosic film.

The polysaccharide additive may be selected from one or more of xanthan gum; alginate; sodium alginate; guar gum; and starch. The polysaccharide additive may act as a viscosity modifier.

The cellulosic film may comprise cellulose. The cellulosic film may comprise regenerated cellulose. The cellulosic film may comprise a derivative of cellulose, such as hydroxypropyl cellulose or carboxymethylcellulose. The cellulosic material in the cellulosic film may be derived from any material containing cellulose, including agricultural waste or wood pulp. The agricultural waste may be selected from oat hulls, tomato leaves, rice husks, jute, straw, wheat, miscanthus, hemp, grass, flax, or food crop waste. Other suitable agricultural waste sources may include coconut fibre, tea shell, chaff fibres, Phoenix dactylifera, Borassus flabellifer, leaf stalks or ginger.

The cellulosic film may have a thickness of between 10 and 100 microns, preferably between 15 and 80 microns, more preferably between 20 and 30 microns. The cellulosic film is preferably transparent.

The wax composition may be coated on the cellulosic film with a coat weight of between about 0.1 gsm and about 6 gsm, preferably between about 0.3 gsm and about 5 gsm.

The natural wax composition may be in the form of a wax film on the surface of the cellulosic film. By the term "wax film" it is to be understood that the wax composition is in the form of a continuous, uniform film.

This may be achieved by curing the wax composition after it has been coated onto the cellulosic film. Curing of the composition may be achieved by heat. The temperature of curing may be above the melting temperature of the wax composition. The temperature may be between about 50 to 120°C, or between about 60 to 100°C or between about 70 to 90°C. If a blend of waxes is used, the temperature may be above the melting point of one or both of the waxes. Without wishing to be bound by theory, this can cause the deposited wax droplets to melt on the cellulosic film surface and then cool to create a continuous wax film. In the form of a wax film, natural waxes can provide comparable water vapour barrier properties to paraffin waxes.

The article may comprise print. In some embodiments, the cellulosic film is printed on the surface opposite the wax composition. Additionally or alternatively, the support layer is printed. This advantageously means that the article can have a pattern, which protected by but is visible through the coated cellulosic film.

The paper-based substrate may be selected from any suitable material including, for example, paper, cardboard, or card. The paper-based substrate may be opaque.

The support layer may be a flexible sheet. The flexible sheet may be formed into a bag. The bag may contain a window formed from the wax-coated cellulosic film.

Alternatively, the support layer may be shaped. By "shaped" it is meant that the support layer independently maintains a three-dimensional shape (such as that of a paper plate) without requiring the application of external forces, as opposed to being a flexible layer without a defined three-dimensional shape (such as a film) or being a structure with only a two-dimensional shape (such as a sheet of card). Thus, the article may also be shaped.

The three-dimensional shape may be formed using any conventional technique, such as molding.

The support layer may have a substantially flat shape. By "substantially flat" it is meant that the majority of the support layer may be a continuous flat surface. Preferably, not all of the support layer is a continuous flat surface. Thus, there is preferably a portion of the support layer adjacent the flat surface that does not extend in the same plane as the flat surface. The inventors have found that having a substantially flat shape advantageously prevents the cellulosic film from peeling off the support layer.

The angle of any portion of the support layer adjacent the flat surface may be more than 90° relative to the flat surface, preferably more than 120° and most preferably more than 140°. The portion adjacent the flat surface may be a lip extending around the article. The article may have a depth which is substantially less than the width. In other words, the article may have a shallow shape (as opposed to a deep shape). This can also help to prevent the cellulosic film from peeling off the support layer.

The support layer may have a thickness of between 100 and 800 microns, preferably between 200 and 700 microns. The support layer may have a weight of between 50 and 500 gsm, preferably between 100 and 400 gsm. This ensures that the article has sufficient structural integrity to hold items, such as food products.

The article may be a plate, a tray, or a bowl. The article may be a paper plate, a paper tray, or a paper bowl. The plate and bowl may be generally round or oval in appearance. The tray may be generally square, rectangular, round or oval in appearance.

The article may be a straw, such as a paper straw, or a cup, such as a paper cup. The article may be any article mentioned in EU Directive No. 2019/904.

The article is preferably suitable for food contact. Therefore, the article may comply with EU Regulation No. 1935/2004 of 27 October 2004 on materials and articles intended to come into contact with food. In particular, the article may comply with Article 3 of the aforementioned EU Regulation No. 1935/2004. The article may also comply with 'Specific measures for groups of materials and articles', as provided for in Article 5, and/or with 'National specific measures' as provided for in Article 6 of the aforementioned EU Regulation No. 1935/2004.

The coated cellulosic film may comply with EU Directive No. 2007/42 of 29 June 2007 relating to materials and articles made of regenerated cellulose film intended to come into contact with foodstuffs.

The wax and, if present, the additives may comprise only components listed in EU Regulation No. 10/2011 of 14 January 2011 on plastic materials and articles intended to come into contact with food. Of course, the wax and, if present, the additives are biodegradable.

The biodegradable article is preferably compostable. In other words, the biodegradable article may be a compostable article. The compostable article may be compliant with EN13432. For the avoidance of doubt, it should be understood that "compostable" is a stricter requirement than "biodegradable", because "compostable" necessitates "biodegradable" as well as other requirements, including disintegration and low levels of heavy metals.

The article may comply with EU Directive No. 2019/904 of 5 June 2019 on the reduction of the impact of certain plastic products on the environment.

The coated cellulosic film may have a water vapour permeability (measured at 25°C/75% RH) of less than 50 g/24hr/m², or less than 40 g/24hr/m², or less than 30 g/24hr/m², or less than 20 g/24hr/m², or less than 15 g/24hr/m², or less than 10 g/24hr/m².

The coated cellulosic film may have a water vapour permeability (measured at 38°C/90% RH) of less than 200 g/24hr/m², or less than 190 g/24hr/m², or less than 180 g/24hr/m².

The article may be substantially or entirely absent of plastic, particularly fossil-fuel plastics. Fossil-fuel plastics are those derived from petroleum or natural gas. Fossil-fuel plastics may also be termed "non-naturally occurring plastics". The article may be absent of polyethylene and/or polypropylene. The article may be absent of polyvinylidene chloride or polyvinylidene dichloride (PVDC).

The article may be substantially or entirely absent of chemically modified or synthesised polymers. The term "absent" herein refers to being present in an amount of less than 1% by weight, or less than 0.1% by weight, or at 0% by weight.

According to a second aspect, there is provided a cellulosic film coated with a wax composition, wherein the wax composition comprises a natural wax. The wax composition may further comprise a natural resin other than wax.

The cellulosic film and the wax composition may have any of the features discussed above in relation to the first aspect of the present invention.

The coated cellulosic film according to the second aspect has a variety of applications. The coated cellulosic film may be laminated, optionally adhered, to a substrate. The substrate may be a paper-based substrate or a non-paper-based substrate. The substrate may be flexible or shaped. This lamination to a substrate can therefore create the article according to the first aspect of the invention.

The substrate may be opaque and the cellulosic film may be transparent. The substrate may not cover the entirety of the cellulosic film. Thus, the area of the cellulosic film that is not adhered to the substrate may form a transparent or at least partially transparent window in the resulting article. The window section may be formed solely from the coated cellulosic film.

The coated cellulosic film may itself be used as packaging, without being adhered to any support layer or substrate. By way of a non-limiting example, the coated cellulosic film may be used as a wrapping for fruit and vegetables. It has surprisingly been found that the wax-coated cellulosic film of the present invention has good water vapour barrier and optical properties, while also being absent any chemically synthesised or modified polymers. The coated cellulosic film may be sealed to itself or to another film to create a packaging.

The coated cellulosic film may be used for at least part of a packaging item. The coated cellulosic film can be used in combination with other conventional packaging materials, such as trays or boxes.

According to a third aspect, there is provided a method of manufacturing a biodegradable article comprising laminating a cellulosic film to a support layer comprising a paper-based substrate, and further comprising the step of coating the cellulosic film with a natural wax composition on the opposite surface of the film to that adjacent the support layer.

In some embodiments, the cellulosic film is coated with a natural wax composition before lamination to the support layer. In some embodiments, the cellulosic film is coated with a natural wax composition after lamination to the support layer.

The natural wax composition may be coated onto the cellulosic film using any suitable technique. In some embodiments, the natural wax composition is spray coated onto the cellulosic film.

The method may further comprise the step of curing the natural wax composition to create a wax film on the surface of the cellulosic film. This may involve heating the composition to a temperature above that of the wax composition after it has been applied to the surface of the cellulosic film. The temperature may be between about 50 to 120°C, or between about 60 to 100°C or between about 70 to 90°C. If a blend of waxes is used, the temperature may be above the melting point of one or both of the waxes.

The third aspect of the invention may have any of the features discussed above in relation to the first aspect of the present invention.

The invention will now be more particularly described with reference to the following examples and figures, in which;
Figure 1 illustrates a section of an article according to an embodiment of the invention;
Figure 2 illustrates a section of a printed article according to an embodiment of the invention;
Figure 3 illustrates a cross-section of a paper plate according to an embodiment of the invention;
Figure 4 illustrates a plan view photograph of a cellulosic film according to an embodiment of the invention having a wax film on a surface thereof (left) and the same cellulosic film in which the wax is not in the form of a film (right); and
Figure 5 illustrates a plan view photograph of a cellulosic film according to an embodiment of the invention having a wax film on a surface thereof (right) and the same cellulosic film in which the wax is not in the form of a film (left).

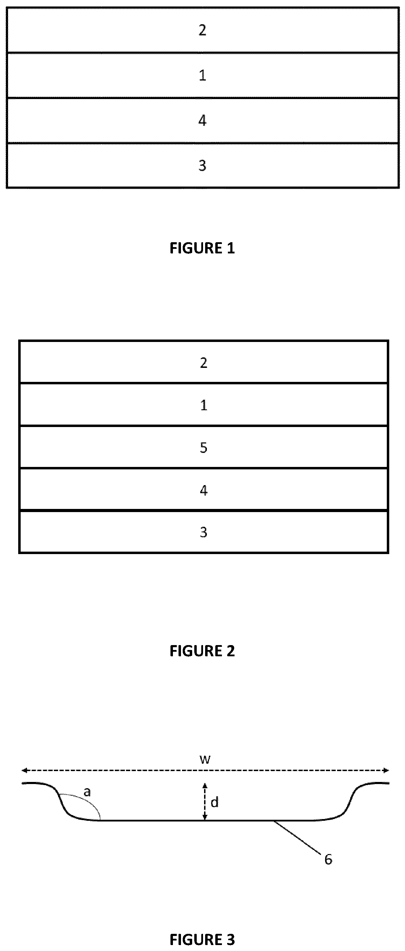

Figure 1 shows an article according to an embodiment of the invention. The article comprises a cellulose film 1, which is coated with a wax composition 2 on one surface. On the opposite surface, the cellulose film 1 is laminated to a paper substrate 3 using an adhesive layer 4.

Figure 2 shows a printed article according to an embodiment of the invention. The article has a cellulose film 1, which is coated with wax composition 2 on one surface. On the opposite surface, the cellulose film 1 is laminated to a paper substrate 3 using an adhesive layer 4. Between the cellulose film 1 and the paper substrate 3 is a print layer 5. The print layer 5 is applied to the cellulose film 1 (on the surface opposite the wax composition 2) before the cellulose film 1 is laminated to the paper substrate 3 using adhesive layer 4.

In an alternative embodiment, the print layer 5 may be applied to the paper substrate 3 before the cellulose film 1 is laminated to the paper substrate 3 using adhesive layer 4. In this arrangement, the order of adhesive layer 4 and print layer 5 in Figure 2 would be reversed.

Figure 3 shows a paper plate 6 according to an embodiment of the invention. The paper plate 6 is formed from a shaped paper-based substrate to which a cellulose film (not shown) coated with a wax composition is laminated. The paper plate 6 has a width w which is substantially greater than its depth d. The angle a between the flat surface of the plate and the lip adjacent the flat surface of the plate is greater than 90°. Thus, the paper plate 6 can be described as a "shallow" plate, as opposed to a "deep" plate.

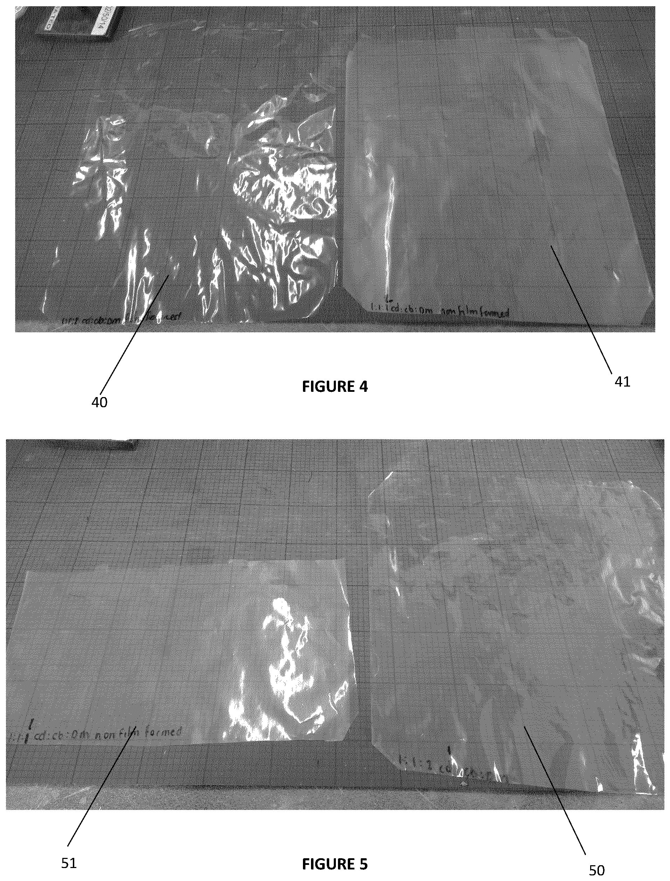

Figures 4 and 5 show embodiments of the cellulosic film coated with a wax composition, wherein the wax composition comprises a natural wax, according to the present invention. Two of the films 40, 50 have been heated such that the wax composition forms a wax film on the surface of the cellulosic film. The other two films 41, 51 have not been treated in this manner.

As can clearly be seen in these photographs, the cured wax film has a higher gloss and a lower haze than the wax composition that has not been cured.

### Measurement Methods

### Water Vapour Permeability (WVP)

WVP is defined as the weight of water vapour in grams passing through a square metre of film over a period of 24 hours. To measure WVP, a sufficient amount of silica gel was placed in a cup so that the bottom was covered to a depth of approximately 0.8 cm. A circular sample of film, with a diameter of approximately 10 cm, was then cut. A thin layer of paraffin wax wiped onto the surface of the cup. The circular sample was placed so that its edges were in contact with the surface and pressed down, ensuring that there were no creases. The coated surface of the film was positioned towards the outside of the cup. The cup was then placed in an oven at the desired temperature and relative humidity (RH). After 24 hours, the cup was removed and weighed immediately. The cup was replaced in the oven and weighed every 24 hours until a constant gain was obtained (usually after 72 hours).

### 45° Gloss

Gloss was measured at 45° and in accordance with ASTM D2457.

### Wide Angle Haze (%)

Wide angle haze was measured at 2.5° and in accordance with ASTM D1003.

### Block Test (g)

After coating, eight pieces of film were cut out (6" by 2"), with the longest length being the machine direction. The pieces of film were separated into pairs and a piece of paper (2" by 2") was placed between adjacent pairs, forming a stack of film pairs each separated by a paper.

The samples were then placed squarely onto a 2" by 2" glass plate and a further glass plate was placed on top of each sample. The samples were placed in a thermostatically controlled oven and a 1.25 kg weight was placed on top of each glass plate. The samples were left for 1 hour at 38°C. After 1 hour, the samples were removed from the oven and cooled for at least 15 minutes prior to further measurement.

After cooling, an edge of a film in a film pair is connected to a top plate using double sided tape and an edge of the other film in the film pair is connected to a bottom plate using double sided tape, along a first edge of each film pair. The same occurs along a second edge of the film pair, the second edge being opposite to the first edge. The plates are then pulled apart in the direction perpendicular to the faces of the films and the weight required to separate the two films from one another was measured (in g). An average of the four samples measured was taken.

### Coated Cellulosic Film Examples

Several coated cellulosic films were made, with each coating comprising a different wax composition, as outlined in Table 1. In each example, the film is a regenerated cellulose film.

**Table 1**

| **#** | **Wax Composition** | **Final Coat Weight (gsm)** |
|---|---|---|
| 1 | Carnauba wax | 3 |
| 2 | Candelilla wax | 3 |
| 3 | 1:1 Candelilla wax : Carnauba wax | 3 |
| 4 | 1:1 Candelilla wax : Pine rosin | 2 |
| 5 | 2:1 Candelilla wax : Pine rosin | 3 |
| 6 | 2:1 Candelilla wax : Carnauba wax | 4 |
| 7 | 1:1:1 Candelilla Wax : Carnauba wax : Pine rosin | 2 |
| 8 | 2:1 Candelilla wax : Pine rosin | 0.69 |
| 9 | 1:1:1 Candelilla Wax : Carnauba wax : Pine rosin | 0.71 |
| 10 | 1:1 Candelilla wax : Pine rosin | 0.60 |
| 11 | 1:1 Dammar : Candelilla wax | 0.75 |
| 12 | 1:1:1 Candelilla wax : Bees wax : Dammar | 0.62 |
| 13 | 1:1:1 Candelilla wax : Carnauba wax : Dammar | 0.65 |
| 14 | 1:1:2 Candelilla wax : Carnauba wax : Dammar | 0.52 |
| 15 | 1:1:2 Dammar : Pine rosin : Candelilla wax | 0.71 |

For each film, the temperate and tropical water vapour permeabilities were measured according to the method described above. The temperate water vapour permeability was measured at 25±0.5°C and 75±2% RH, and the tropical water vapour permeability was measured at 38±0.5°C and 90±2% RH. In addition, the hydrophobic surface properties were visually observed, and the 45° gloss and wide angle haze were measured. The results can be found in Table 2.

**Table 2**

| **#** | **Water Vapour Permeability (WVP)** | | **Hydrophobic Surface Observations** | **45° Gloss (units)** | **Wide Angle Haze (%)** |
|---|---|---|---|---|---|
| | Temperate (g/24hr.m²) | Tropical (g/24hr.m²) | | | |
| 1 | 41.08 | - | Water readily repelled | 33.4 | 10.3 |
| 2 | 14.56 | - | Water readily repelled | 38.1 | 10.5 |
| 3 | 13.6 | 66.30 | Water readily repelled | 53.4 | 9.8 |
| 4 | 14.56 | 58.14 | Water readily repelled | 50.2 | 4.8 |
| 5 | 22.34 | - | Water readily repelled | 26.2 | 7.1 |
| 6 | 5.97 | - | Water readily repelled | - | - |
| 7 | 10.72 | - | Water readily repelled | 43.5 | 6.2 |
| 8 | 20.71 | 117.30 | Water readily repelled | 89.0 | 5.7 |
| 9 | 87.57 | 335.09 | Water readily repelled | 85.6 | 5.4 |
| 10 | 50.57 | 336.47 | Water readily repelled | 84.1 | 2.8 |
| 11 | 30.12 | 353.19 | Water readily repelled | 87.1 | 2.7 |
| 12 | 16.46 | 51.76 | Water readily repelled | 87.6 | 3.3 |
| 13 | 51.04 | 396.58 | Water readily repelled | 81.9 | 6.8 |
| 14 | 41.54 | 371.81 | Water readily repelled | 96.2 | 7.5 |
| 15 | 32.74 | 251.44 | Water readily repelled | 97.8 | 3.3 |

As can be seen, all of the films resulted in a surface in which water was readily repelled, which shows that the films have good moisture resistance properties.

The best water vapour permeabilities were seen in the Examples that contain a blend of waxes, i.e. those that contain both Candelilla wax and Carnauba wax, at a coat weight of greater than 1 gsm. The comparable commercially available film is NatureFlex^{™} 22 DNE, which is also only coated on a single side. This provides a water vapour transmission rate at 25°C and 75% RH of 25g/m².24 hours. Thus, the coatings shown above and particularly those including a blend of waxes, show comparable if not improved water vapour barrier properties to conventional chemically modified or synthesised coatings.

Additionally, Example 4 in particular exhibited a very good surface appearance, and Example 7 exhibited an improved surface appearance compared to Example 3. This improved surface appearance is exemplified by a lower wide angle haze. This can be attributed to the presence of pine rosin in the coating.

The best water vapour permeabilities were also seen in the Examples with a coat weight of greater than 1 gsm. For example, Example 7 exhibited an improved water vapour permeability compared to Example 9 and Example 4 exhibited an improved water vapour permeability compared to Example 10.

Furthermore, Examples with lower coat weights exhibited improved surface appearance compared to Examples with higher coat weights. For example, Example 10 exhibits an improved surface appearance compared to Example 4 and Example 8 exhibits an improved surface appearance compared to Example 5, as exemplified by a lower wide angle haze.

Additionally, it can be seen that the amount of wax present in the wax composition influences the resulting properties of the film.

For example, Examples having an increased proportion of wax provided improved barrier properties. Example 8 and Example 12 both have a wax:resin ratio of 2:1 and exhibited improved barrier properties compared to Example 10 which has a 1:1 ratio of wax:resin. This is a result of wax, in particular Candelilla wax, having good water vapour barrier properties.

The optical properties of the wax may also influence the properties of the film. For example, Carnauba wax does not have as good optical and barrier properties as Candelilla wax. This can be seen by comparing Example 8 and Example 9, both of which have a ratio of wax:pine rosin of 2:1. Example 9 has a much greater water vapour permeability than Example 8, due to the presence of Carnauba wax. Therefore, the amount and type of wax present can be tailored to balance the moisture barrier and heat barrier properties of the article.

Commercially available Natureflex^{™} films have a wide angle haze of between 5 and 6. Thus, the coatings of the present invention have comparable optical properties to films created using chemically modified or synthesised polymers.

The melting point of the wax is also important, as while Carnuba wax is not as hydrophobic as Candelilla wax and does not produce the same level of moisture barrier, it has a higher melting point (81°C compared to 71°C for Candelilla). Thus, this wax can improve the heat resistance properties of the coating. Additionally, Dammar resin has a melting point of greater than 100°C. A blend of waxes can therefore balance the moisture barrier and heat barrier properties of the article.

The block test was conducted on Examples 8 to 15 and measured according to the method described above. The results can be found in Table 3.

**Table 3**

| # | **Average weight required to separate the films (g)** |
|---|---|
| 8 | 0 |
| 9 | 0 |
| 10 | 0 |
| 11 | 0 |
| 12 | 0 |
| 13 | 0 |
| 14 | 0 |
| 15 | 0 |

As can be seen, none of the films of Examples 8 to 15 showed any blocking, which demonstrates that the films satisfactorily do not adhere to one another.

The results summarised in Tables 1 to 3 have been measured on cellulosic films that have been coated with a wax composition and heat cured to form a wax film on the surface thereof. Tables 5 and 6 compare the properties of heat cured films and films in which the wax composition has not been heat treated. The films were measured according to the methods described above.

The final coat weight of Examples 8 to 15 is outlined in Table 1.

**Table 4**

| | **Final Coat Weight (gsm)** | |
|---|---|---|
| # | Heat Cured Film | Non-Heat Cured Film |
| 8 | 0.69 | 1.03 |
| 9 | 0.71 | 1.09 |
| 10 | 0.60 | 1.04 |
| 11 | 0.75 | 1.04 |
| 12 | 0.62 | 0.76 |
| 13 | 0.65 | 1.17 |
| 14 | 0.52 | 0.51 |
| 15 | 0.71 | 0.87 |

**Table 5**

| | **Temperate (g/24hr.m²)** | | **Tropical (24hr/m2)** | |
|---|---|---|---|---|
| # | Heat Cured Film | Non-Heat Cured Film | Heat Cured Film | Non-Heat Cured Film |
| 8 | 20.71 | 171.49 | 117.30 | 767.76 |
| 9 | 87.57 | 386.14 | 335.09 | 2040.60 |
| 10 | 50.57 | 142.58 | 336.47 | 340.37 |
| 11 | 30.12 | 50.90 | 353.19 | 380.19 |
| 12 | 16.46 | 73.43 | 51.76 | 354.97 |
| 13 | 51.04 | 495.19 | 396.58 | 1895.86 |
| 14 | 41.54 | 233.65 | 371.81 | 1071.16 |
| 15 | 32.74 | 109.56 | 251.44 | 576.80 |

The best water vapour permeabilities were seen in the heat cured films, as the water vapour permeabilities significantly increased in the non-heat cured films, both under temperate and tropical conditions.

**Table 6**

| | **45° Gloss (units)** | | **Wide Angle Haze (%)** | | **Average weight required to separate the films (g)** | |
|---|---|---|---|---|---|---|
| # | Heat Cured Film | Non-Heat Cured Film | Heat Cured Film | Non-Heat Cured Film | Heat Cured Film | Non-Heat Cured Film |
| 8 | 89.0 | 71.9 | 5.7 | 6.8 | 0 | 0 |
| 9 | 85.6 | 52.3 | 5.4 | 19.1 | 0 | 0 |
| 10 | 84.1 | 77.3 | 2.8 | 5.9 | 0 | 0 |
| 11 | 87.1 | 63.9 | 2.7 | 15.5 | 0 | 0 |
| 12 | 87.6 | 68.8 | 3.3 | 15.6 | 0 | 0 |
| 13 | 81.9 | 55.3 | 6.8 | 21.9 | 0 | 0 |
| 14 | 96.2 | 30.9 | 7.5 | 30.5 | 0 | 0 |
| 15 | 97.8 | 63.5 | 3.3 | 12.4 | 0 | 0 |

As can be seen, the heat cured films provide improved surface appearance compared to non-heat cured films, as exemplified by a lower wide angle haze and increased 45° gloss.

Without wishing to be bound be theory, it is believed that upon coating the cellulosic film with a natural wax composition, the droplets of the wax composition do not provide a uniform coating over the surface of the film. As a result, these droplets create a hazy appearance as a result of diffraction and/or refraction of light, and also act to increase the water vapour permeability through the film as a whole.

In contrast, heat curing the film causes the individual wax droplets on the cellulosic film to melt and create a continuous wax film. This wax film is understood to be relatively uniform and transparent. This therefore significantly decreases the wide angle haze and the water vapour permeability.

### Clauses:

1. A biodegradable article comprising a cellulosic film that is coated with a natural wax composition on one surface and is laminated to a support layer comprising a paper-based substrate on the opposite surface.
2. The article according to clause 1 comprising an adhesive between the cellulosic film and the support layer.
3. The article according to clause 2 wherein the adhesive is a compostable adhesive.
4. The article according to any one of clauses 1 to 3 wherein there is a portion of the cellulosic film that is not laminated to the support layer that creates a transparent window.
5. The article according to any one of clauses 1 to 4 wherein the natural wax composition comprises a plant-based wax.
6. The article according to any one of clauses 1 to 5 wherein the natural wax composition comprises a blend of two or more waxes and/or wherein the natural wax composition coating is in the form of a wax film on the surface of the cellulosic film.
7. The article according to clause 5 or clause 6 wherein the natural wax composition comprises one or more of candelilla wax and carnauba wax.
8. The article according to any one of clauses 1 to 7 wherein the wax composition further comprises one or more additives, optionally one or more of an antiblock; a viscosity modifier; a natural resin other than wax; an inorganic filler; a thickening agent and a polysaccharide additive, optionally wherein the wax composition comprises at least 50%, preferably at least 60% by weight natural wax.
9. The article according to any one of clauses 1 to 8 wherein the article is absent chemically modified or synthesised polymers.
10. The article according to any one of clauses 1 to 9 wherein the cellulosic film is printed on the surface opposite the natural wax composition.
11. The article according to any one of clauses 1 to 10 wherein the support layer is printed.
12. The article according to any one of clauses 1 to 11 wherein the support layer is shaped.
13. The article according to clause 12 wherein the support layer has a substantially flat shape.
14. The article according to any one of clauses 1 to 13 wherein the article is a plate, a tray, or a bowl.
15. The article according to any one of clauses 1 to 14 wherein the article has a depth which is substantially less than the width.
16. The article according to any one of clauses 1 to 15 wherein the article is for food contact.
17. The article according to any one of clauses 1 to 16 wherein the article undergoes at least 90% biodegradation in less than 6 months (laboratory test method EN14855).
18. The article according to any one of clauses 1 to 17 wherein the coated cellulosic film has a water vapour permeability (measured at 25±0.5°C/75±2% RH) of less than 50 g/24hr/m², or less than 40 g/24hr/m², or less than 30 g/24hr/m², or less than 20 g/24hr/m², or less than 15 g/24hr/m², or less than 10 g/24hr/m².
19. The article according to any one of clauses 1 to 18 wherein the coated cellulosic film has a water vapour permeability (measured at 38±0.5°C/90±2% RH) of less than 200 g/24hr/m², or less than 190 g/24hr/m², or less than 180 g/24hr/m².
20. A cellulosic film coated with a wax composition, wherein the wax composition comprises a natural wax.
21. A method of manufacturing a biodegradable article comprising laminating a cellulosic film to a support layer comprising a paper-based substrate, and further comprising the step of coating the cellulosic film with a natural wax composition on the opposite surface of the film to that adjacent the support layer.
22. The method according to clause 21 wherein the cellulosic film is coated with a wax composition before lamination to the support layer.
23. The method according to clause 21 wherein the cellulosic film is coated with a wax composition after lamination to the support layer.
24. The method according to any one of clause 21 to 23 wherein the natural wax composition is spray coated onto the cellulosic film.
25. The method according to any one of clause 21 to 24 further comprising the step of curing the natural wax composition to create a wax film on the surface of the cellulosic film.

## Claims

1. A cellulosic film coated with a wax composition, wherein the wax composition comprises a natural wax, wherein the natural wax composition comprises a blend of two or more waxes.

2. The film according to Claim 1 wherein one or more, or all, of the waxes have a melting point of at least 60°C, or at least 65°C, or at least 70°C, or at least 75°C; and/or wherein the two waxes have a weight ratio from about 10:1 to about 1:10, or from about 5:1 to about 1:5, or from about 3:1 to about 1:3, or from about 2:1 to about 1:2, or about 1:1.

3. The film according to Claim 1 or Claim 2 wherein the natural wax composition comprises a plant-based wax; and/or
wherein the natural wax composition coating is in the form of a wax film on the surface of the cellulosic film.

4. The film according to any one of Claims 1 to 3 wherein the natural wax composition comprises one or more of candelilla wax, carnauba wax, soy wax, hemp wax, jojoba wax, ouricury wax and/or rice-bran wax.

5. The film according to any one of Claims 1 to 4 wherein the natural wax composition comprises one or more of candelilla wax and carnauba wax.

6. The film according to any one of Claims 1 to 5 wherein the wax composition further comprises one or more additives, optionally one or more of an antiblock; a viscosity modifier; a natural resin other than wax; an inorganic filler; a thickening agent and a polysaccharide additive, optionally wherein the wax composition comprises at least 50%, preferably at least 60% by weight natural wax; and/or
wherein the article is absent chemically modified or synthesised polymers.

7. The film according to any one of Claims 1 to 6, wherein the cellulosic film is laminated, optionally adhered to a support layer comprising a paper-based substrate.

8. A biodegradable article comprising a cellulosic film that is coated with a natural wax composition on one surface and is laminated to a support layer comprising a paper-based substrate on the opposite surface, wherein the natural wax composition comprises a blend of two or more waxes.

9. The article according to Claim 8 comprising an adhesive between the cellulosic film and the support layer, optionally wherein the adhesive is a compostable adhesive.

10. The article according to Claim 8 or Claim 9 wherein the substrate does not cover the entirety of the cellulosic film and the area of the cellulosic film that is not adhered to the substrate creates a transparent or at least partially transparent window.

11. The article according to any one of Claims 8 to 10 wherein the cellulosic film is printed on the surface opposite the natural wax composition; and/or
wherein the cellulosic film is laminated to two or more surfaces of the support layer; and/or wherein the support layer is printed.

12. The article according to any one of Claims 8 to 11 wherein the support layer is shaped, optionally wherein the support layer has a substantially flat shape.

13. The article according to any one of Claims 8 to 12 wherein the article is a plate, a tray, or a bowl; and/or
wherein the article has a depth which is substantially less than the width; and/or wherein the article is for food contact; and/or
wherein the article undergoes at least 90% biodegradation in less than 6 months (laboratory test method EN14855); and/or
wherein the coated cellulosic film has a water vapour permeability (measured at 25±0.5°C/75±2% RH) of less than 50 g/24hr/m², or less than 40 g/24hr/m², or less than 30 g/24hr/m², or less than 20 g/24hr/m², or less than 15 g/24hr/m², or less than 10 g/24hr/m²; and/or
wherein the coated cellulosic film has a water vapour permeability (measured at 38±0.5°C/90±2% RH) of less than 200 g/24hr/m², or less than 190 g/24hr/m², or less than 180 g/24hr/m².

14. A method of manufacturing a biodegradable article comprising laminating a cellulosic film to a support layer comprising a paper-based substrate, and further comprising the step of coating the cellulosic film with a natural wax composition on the opposite surface of the film to that adjacent the support layer.

15. The method according to Claim 14 wherein the cellulosic film is coated with a wax composition before lamination to the support layer; or
wherein the cellulosic film is coated with a wax composition after lamination to the support layer; and/or
wherein the natural wax composition is spray coated onto the cellulosic film; and/or further comprising the step of curing the natural wax composition to create a wax film on the surface of the cellulosic film.
